# EUROPÄISCHE PATENTANMELDUNG

(11) **EP 1 967 555 A1**
(43) Veröffentlichungstag der Anmeldung: **10.09.2008**
(21) Anmeldenummer: 07004530.7
(22) Anmeldetag: 06.03.2007
(51) Int. Cl.: C09D 5/16, C09G 1/08, B05D 1/02, B05D 5/08, C09D 191/08

(54) **Schadstofffreier Antifouling umfassend eines festen und eines flüssigen Kohlenwasserstoffgemisches**

(71) Anmelder: Herzog, Roland, 8107 Buchs (CH)
(72) Erfinder: Herzog, Roland, 8107 Buchs (CH)
(74) Vertreter: Grimm, Siegfried

(57) **Zusammenfassung**

Die Erfindung betrifft einen schadstofffreien Antifouling-Schutzanstrich, umfassend ein Gemisch aus 33-48 % eines bei Raumtemperatur festen Kohlenwasserstoffgemisches und 52 - 67 % eines bei Raumtemperatur flüssigen Kohlenwasserstoffgemisches; dessen Applikation; Verwendung und Herstellung; des weiteren Bootsrümpfe beschichtet mit solchen Antifoulings und Gebinde enthaltend diese Antifoulings.

## Beschreibung

Die Erfindung betrifft einen schadstofffreien Antifouling-Schutzanstrich, dessen Applikation, Verwendung und Herstellung, des weiteren Bootsrümpfe beschichtet mit solchen Antifoulings und Gebinde enthaltend diese Antifoulings.

Der Unterwasserteil jedes Schiffes ist mit Schutzanstrichen versehen, hauptsächlich um an Stahlschiffen Korrosion zu verhindern und andererseits an Kunststoffschalen die sog. Osmose zu verhindern. Diese Schutzanstriche dienen ausserdem dazu, dem Unterwasserteil des Schiffes eine glatte, im Wasser bei Fahrt wenig Reibung bietende Oberfläche zu geben.

An diesen dem Korrosionsschutz und dem Schutz vor Osmose dienenden Schutzanstrichen setzen sich innert kurzer Zeit schon Organismen, Pflanzenkeime und Wasserlebewesen fest. Es entsteht ein sog. Beschlag, eine schleimige Oberfläche, aus der heraus wiederum Algenkeime wachsen. Dieser Vorgang ist vergleichbar mit anderen Objekten im Wasser, es setzen sich Wasserpflanzen, Mikroben und Kleinlebewesen an. Der Bewuchs entsteht rascher an Oberflächen die im stillen Wasser liegen. Stete Bewegung des Wassers und Fahrt eines Schiffes verzögert tendenziell Bewuchs und Beschlag. Nicht selten wachsen Algen an Schiffsrümpfen innert wenigen Monaten bis auf eine Länge von 20 cm. Nicht nur pflanzlicher Bewuchs, sondern in vielen Fällen auch Muscheln befallen die Schiffsrümpfe, sie vermehren sich und besiedeln das Unterwasserteil der Schiffe innerhalb einer Saison zu Tausenden. Bewuchs durch Algen, und Befall durch Lebewesen, wie Muscheln, verursachen eine rauhe und unebene Oberfläche des Unterwasserschiffes, was das Gleiten im Wasser beeinträchtigt. Studien haben gezeigt, dass ein Schiff mit Bewuchs am Unterwasserteil und damit rauher, unebener Oberfläche bis zu 1 km Geschwindigkeitsverlust erleiden kann und damit sich die Betriebskosten durch Mehrverbrauch an Treibstoff beträchtlich erhöhen.

Es ist bereits bekannt, Unterwasserschiffe mit Antifouling-Schutzanstrichen auszurüsten. Diese Lackartigen Antifoulings werden über den dem Korrosionsschutz dienenden Schutzanstrichen aufgebracht. Antifloulings sollen dazu dienen, den Bewuchs durch Algen und den Beschlag durch Lebewesen zu reduzieren oder zeitlich zu verzögern. Die bekannten Antifouling-Anstriche enthalten zu diesem Zweck wirksame, aber hochgradig giftige Verbindungen, welche sich aus der Farbschicht heraus kontinuierlich aussondern. Daher ist deren Anwendung in der EU und anderen Ländern aus Umweltschutzgründen verboten oder stark eingeschränkt.

Die Wirkung Lack-artiger Antifouling-Anstriche ist beim frisch erneuerten Anstrich am besten, vermindert sich aber sehr bald im Laufe eines Jahres. Konventionelle Antifouling-Anstriche haben eine toxische Wirkung auf Algen und Wasserlebewesen, was deren Wirkungsweise erklärt. Die Giftstoffe, die aus den Antifouling-Anstrichen austreten, werden somit in das Wasser abgegeben. Damit geht eine Verschmutzung / Verseuchung des Wassers einher, was eine Belastung der Umwelt mit toxischen und schwer oder nicht abbaubaren Stoffen bedeutet. Durch den kontinuierlichen Austritt der toxischen Stoffe aus dem Antifouling-Anstrich muss dieser periodisch, zumeist jährlich, erneuert werden. Dies wiederum bedeutet, dass mit jedem neuen Anstrich die Umwelt erneut mit toxischen Stoffen belastet wird.

Es ist weiterhin bekannt, dass Wachse an Oberflächen von der Witterung ausgesetzten Gegenständen die Eigenschaft aufweisen, einen gewissen Schutz vor Verschmutzungen bieten. Als Beispiel gelten Fahrzeuge, insbesondere Personenwagen, deren Lacke weit länger Glanz und Pflegeleichtigkeit aufweisen, wenn sie periodisch nach dem Reinigen mit einem Wachs-Film versehen werden. Staub, Russpartikel und Strassenschmutz haften an den mit Wachs geschützten lackierten Oberflächen kaum; ganz im Gegensatz zu Lackoberflächen ohne Wachsschutz, die bald einmal schwer zu reinigen sind, weil sich feine Schmutzpartikel festkrallen können. Typischwerweise wird der Wachs-Film durch aufbringen (streichen oder sprühen) einer Wachs-Emulsion erzeugt. Die für Fahrzeuge bekannten Wachs-Filme müssen regelmässig und in vergleichsweise kurzen Zeitabständen (ca. monatlich) erneuert werden, um eine ausreichende Schutzwirkung sicherzustellen. Solche Wachs-Filme sind als Antifoulings ungeeignet, da sie u.a. eine ungenügende Dauerhaltbarkeit zeigen.

Es ist weiterhin aus GB 1439773 bekannt, dass bestimmte Wachse als Beschichtungen verwendet werden können, die neben dem Glätten des Schiffsrumpfes und dem Korrosionsschutz auch Antifouling - Eigenschaften aufweisen. Gemäss diesem Dokument werden im wesentlichen reine, geradkettige Wachse mit einem Schmelzpunkt von 50-60°C für die Beschichtung verwendet. Es ist jedoch anzumerken, dass im heutigen Schiffbau die Oberfläche des Unterwasserteils bereits durch die Konstruktion und das verwendete Material selbst weitgehend eben und glatt hergestellt wird. Aus Kunststoffen hergestellte Schiffe, welche in Negativ-Formen laminiert oder gegossen werden, ist die Ebenheit durch die Negativform bereits gegeben. Die Ebenheit muss kaum nachgeformt werden. Schiffe aus Stahl werden nach dem verschweissen der bereits vorgefertigten einzelnen Platten, mit Kunststoff-Spachtelmassen nachgeglättet. Diese Nachbehandlung der Oberflächen-Ebenheit geschieht jedoch bevor Antifoulings aufgebracht werden. Dem Antifouling kommt daher im modernen Schiffbau nicht die Funktion einer Glättung des Unterwasserschiffes zu.

Es besteht daher ein Bedarf an Antifoulings, welche die genannten Nachteile nicht aufweisen. Insbesondere besteht Bedarf an Antifoulings, welche leicht zu verarbeiten sind, kostengünstig sind, eine gute Dauerbeständigkeit zeigen, toxikologisch unbedenklich sind. Es zeigt sich, dass die gewünschten Eigenschaften einander oft entgegenstehen, so dass die Verbesserung einer Eigenschaft Verschlechterungen einer anderen Eigenschaft mit sich bringen.

Es wurde nun überraschend ein Antifouling, wie in Anspruch 1 beschrieben, gefunden, dass eines oder mehrere der vorgenannten Probleme löst. Vorteilhafte Ausführungsformen sind in den abhängigen Ansprüchen sowie in der Beschreibung angegeben. Weitere Aspekte der Erfindung sind in den unabhängigen Ansprüchen sowie in der Beschreibung angegeben. Dabei betrifft die Erfindung neben den Antifoulings ("erster Aspekt"), auch deren Applikation ("zweiter Aspekt") deren Verwendung ("dritter Aspekt), des weiteren Bootsrümpfe beschichtet mit solchen Antifoulings (vierter Aspekt"), Gebinde enthaltend diese Antifoulings und Verfahren zur Herstellung von Antifoulings und deren Gebinde("sechster Aspekt").

Die in nachfolgend aufgeführten allgemeinen, bevorzugten und besonders bevorzugten Ausführungsformen, Definitionen und Alternativen können beliebig miteinander kombiniert werden und sind Gegenstand der vorliegenden Erfindung. Des Weiteren können einzelne Definitionen / Alternativen entfallen.

Die Erfindung betrifft daher in einem **ersten Aspekt** ein Antifouling umfassend (d.h. enthaltend oder bestehend aus) ein Gemisch aus 28-48 % eines bei Raumtemperatur festen Kohlenwasserstoffgemisches und 52 - 72 % eines bei Raumtemperatur flüssigen Kohlenwasserstoffgemisches.

Das erfindungsgemässe Antifouling basiert somit auf Komponenten, die ungiftig, unbedenklich und nicht wasserschädlich sind. Ferner ist es in Wasser praktisch unlöslich, nicht flüchtig, geruchlos, ungiftig für aquatische Organismen sowie fast vollständig biologisch abbaubar. Weder die Herstellung des Antifoulings noch dessen Applikation erzeugen die Gesundheit schädigende Vernebelung oder Dämpfe.

Bei der Wahl des geeigneten Verhältnisses zwischen den genannten Komponenten können folgende Regeln berücksichtigt werden. Höhere Anteile von festen Kohlenwasserstoffen ergeben höhere Schichtstärken, verringern jedoch die Haftung und erschweren die Verarbeitung von Hand. Höhere Anteile an flüssigen Kohlenwasserstoffen vermindern Schichtstärke und somit die Lebensdauer der Beschichtung.

Bei Raumtemperatur feste Kohlenwasserstoffgemische ("feste KW") sind dem Fachmann bekannt und z.B. unter der Sammelbezeichnung Hartwachs, Hartparaffin (Paraffinum solidum), synthetisches Wachs kommerziell erhältlich. Aufgrund Ihrer Herstellung sind feste KW häufig, aber nicht notwendigerweise Stoffgemische verschiedener Kohlenwasserstoffe. Der Begriff "fester KW" soll daher auch einen im chemischen Sinn einheitlichen, einzelnen bei Raumtemperatur festen Kohlenwasserstoff umfassen.

Bei Raumtemperatur flüssige Kohlenwasserstoffgemische ("flüssige KW") sind dem Fachmann ebenfalls bekannt. und z.B. unter dem Begriff Weissöl (technisch / medizinisch), dickflüssiges Paraffin (Paraffinum liquidum) und dünnflüssiges Paraffin (Paraffinum subliquidum) kommerziell erhältlich. Aufgrund Ihrer Herstellung sind flüssige KW häufig, aber nicht notwendigerweise Stoffgemische verschiedener Kohlenwasserstoffe. Der Begriff "flüssiger KW" soll daher auch einen im chemischen Sinn einheitlichen, einzelnen bei Raumtemperatur flüssigen Kohlenwasserstoff umfassen.

Feste KW und flüssige KW können im Rahmen der oben genannten Verhältnisse beliebig miteinander kombiniert werden. So kann z.B. das flüssige KW sich seinerseits aus Paraffinum liquidum und ~subliquidum zusammensetzen. Als besonders geeignet hat sich ein Antifouling erwiesen, welches 33-48 %, bevorzugt 40-48 % Hartwachs und 52-67 %, bevorzugt 52-60 % Paraffinum subliquidum, enthält.

Ein Vorteil der beschriebenen Antifoulings ist es, dass sie in geringerer Schichtdicke, verglichen mit den bekannten, auf Paraffinen basierenden Antifoulings, wirksam sind. So ist eine Schichtdicke von unter 100 Mikrometer, beispielsweise von 50 - 60 Mikrometer ausreichend, um einen mindestens zweijährigen Schutz zu erzielen.

Dem Antifouling können weitere Komponenten, wie Verdünnungsmittel, Pigmente oder andere Hilfsstoffe zugesetzt werden. Vielfach ist der Zusatz solcher Komponenten jedoch nicht nötig.

Ein weiterer Vorteil der erfindungsgemässen Antifoulings ist die Dauerhaftigkeit und Wirksamkeit der Behandlung. Diese überdauert diejenige konventioneller Antifouling-Anstriche beträchtlich. Versuche zeigten, dass die Wirkung auch nach zwei Jahren Fahrt mit Schiffen noch ausreichend vorhanden ist. Der Abbau des erfindungsgemässen Antifoulings erfolgt einerseits durch Reibung zwischen Rumpf und Wasser, was erklärt, dass eine dickere Beschichtung eine verlängerte Wirkung ergibt; andererseits aber auch in geringem Masse durch den langsamen biologischen Abbau.

In einem **zweiten Aspekt** betrifft die vorliegende Erfindung ein Verfahren zum Beschichten von Unterwasserschiffen mit einem Antifouling wie vorstehend beschrieben. ("Applikation des Antifoulings")

Die Behandlung des Unterwasserschiffs mit dem erfindungsgemässen Antifouling kann einerseits direkt auf Korrosionsschutzanstriche erfolgen, als auch über noch bestehende alte Antifoulings jeglicher Art. Die Behandlung erfolgt anlog zur Aufbringung eines neuen Farbanstriches unter den dem Fachmann üblichen Voraussetzungen. Eine vorgängige Reinigung der Oberfläche von Bewuchs- und Ablagerungsrückständen ist daher vorteilhaft. Weiterhin erfolgt die Behandlung vorteilhaft auf trockene Untergründe. Weiterhin soll vor und während der Verarbeitung der Taupunkt, analog Farbanstrichen, nicht überschritten werden.

Die Verarbeitung des Antifoulings kann grundsätzlich sowohl im Streich-, Roll- oder Sprühverfahren erfolgen. Um die Anwendung dem Bootseigner im Do-it-yourself zu ermöglichen und zu erleichtern bietet sich das Hand-Sprühverfahren an. Bevorzugt werden solche Sprühdosen verwendet, die aus allen Positionen, (auch über Kopf) arbeiten. Dies ermöglicht es jedermann, jeden Winkel und jede Fläche des Unterwasserschiffes durch einfaches besprühen zu behandeln.

Die vorliegende Erfindung betrifft daher ein Verfahren zum Beschichten von Unterwasserschiffen, das dadurch gekennzeichnet ist, dass ein Antifouling wie vorstehend beschrieben, mittels Streich-, Roll- oder Sprühverfahren in einer Dicke von weniger als 100 Mikrometer, bevorzugt in einer Dicke von 50 - 60 Mikrometer, als äusserste Schicht auf das Unteerwasserschiff aufgetragen wird.

In einer vorteilhaften Ausführungsform wird das Antifouling mittels aufsprühen aus einer Sprühdose aufgebracht.

In einer weiteren vorteilhaften Ausführungsform wird die Sprühdose vor Gebrauch zunächst auf 50 - 60 °C erwärmt. Das Erwärmen kann z.B. in einem einfachen Wasserbad erfolgen. Die vorliegende Erfindung betrifft daher auch ein Verfahren zum Beschichten von Unterwasserschiffen, das dadurch gekennzeichnet ist, dass ein Antifouling wie vorstehend beschrieben zunächst auf 50-60°C erwärmt wird und anschliessend wie vorstehend beschrieben aufgetragen wird.

In einer weiteren Ausführungsform wird das aufgetragene Antifouling in einem zweiten Schritt geglättet ("nachverschlichtet"). Das Nachverschlichten ist ein allgemein bekannter Arbeitsgang und kann mit den gängigen Mitteln, z.B. unter Verwendung eines Kurzhaar-Farbrollers, erfolgen. Das Nachverschlichten führt zu einer weiteren Verbesserung des Antifouling Effektes und verbessert die Haltbarkeit. Die Erfindung betrifft daher auch ein Verfahren zum Beschichten von Unterwasserschiffen, dadurch gekennzeichnet, dass zunächst ein Antifouling wie vorstehend beschrieben aufgetragen wird und anschliessend die gebildete Schicht geglättet wird.

Die Erfindung betrifft in einem weiteren Ausführungsform ein Verfahren zum behandeln von Unterwasserschiffen mit einem Antifouling wie vorstehend beschrieben, dadurch gekennzeichnet, dass das Antifouling aus einer Sprayflasche heraus, gegebenenfalls nach Erwärmung der Sprayflasche auf 50 - 60 °C, direkt als äusserste Schicht auf das Unterwasserschiff aufgetragen wird. Die Verarbeitung des erfindungsgemässen Antifoulings erfolgt, wie oben beschrieben, im Sprühverfahren bei Temperaturen von maximal 50 - 60 °C. Die Applikation ist daher einfach und kann mittels handelsüblicher Sprayflaschen und im Do-it-yourself Verfahren erfolgen. Die bekannten Antifoulings auf Wachsbasis werden gemäss GB1439773 bei Temperaturen von etwa 40 - 80 °C über dem Schmelzpunkt, d.h. bei mindestens 100°C verarbeitet. Die aus GB4319773 bekannten Antifoulings müssen daher mittels aufwändiger Vorrichtungen appliziert und ggf. nachbehandelt werden; sie können u.a. wegen der hohen Verarbeitungstemperaturen nicht mittels handelsüblicher Sprühflaschen im do-it-yourself Verfahren aufgebracht werden.

Die Erfindung betrifft daher auch eine Sprayflasche, enthaltend ein Antifouling wie vorstehend beschrieben.

Vorteilhaft werden in diesem Verfahren solche Sprühflaschen verwendet, die es ermöglichen aus allen Lagen heraus (d.h. senkrecht, waagrecht und vertikal über Kopf) fortdauernd bis zur Entleerung zu sprühen.

Solche Sprühflaschen sind kommerziell erhältlich, die gewünschten Sprüheigenschaften werden typischerweise durch die Konstruktion eines entsprechenden Sprühkopfes mit Saugteil erreicht. Allgemein können sowohl drucklose Sprühflaschen als auch mit Treibgas gefüllte Sprühdosen verwendet werden, als vorteilhaft haben sich jedoch drucklose Sprühflaschen mit Handbetätigung erwiesen.

In einer weiteren vorteilhaften Ausführungsform betrifft das Verfahren die Behandlung von Sportbooten, wie Ruderbooten, Ein- oder mehrrümpfige Segelbooten oder Motorbooten sowie Fischerei- und Arbeitsschiffen.

In einer weiteren vorteilhaften Ausführungsform betrifft das Verfahren die Behandlung von Unterwasserbooten aus Kunststoff, wie Polyamid, Acryl, Carbon.

In einem **dritten Aspekt** betrifft die Erfindung die Verwendung von Antifoulings wie vorstehend beschrieben zur Behandlung von unter Wasser liegenden Teilen von Schiffen ("Unterwasserschiff") oder anderen Vorrichtungen welche für den Einsatz unter Wasser vorgesehen sind. Solche anderen Vorrichtungen können z.B. die entsprechenden Teile von Bootsstegen, Bojen und sonstigen Einrichtungen von z.B. Hafenanlagen oder Schwimmbädern sein. Insbesondere betrifft es die Verwendung von Unterwasserschiffen von Sportbooten, Fischerei- oder Arbeitsschiffen. Die erfindungsgemässen Antifoulings bieten hier einen dauerhaften Schutz, d.h. Schutz für mindestens 2 Saisons (z.B. im Fall von Einrichtungen in Freibädern) oder 2 Jahre (z.B. im Fall von Sportbooten).

Das erfindungsgemässe Antifouling ist für die Verwendung in Süsswasser und Salzwasser gleichermassen geeignet. Es hat sich gezeigt, dass die Behandlung in beiden Fällen eine Oberfläche ergibt, an welcher Bewuchs durch Algen und das ansetzen von Wasserlebewesen verhindert, oder doch ganz wesentlich erschwert wird. Deren Haftung an der Oberfläche ist durch das erfindungsgemässe Antifouling verunmöglicht. Findet trotzdem leichter Bewuchs statt, ist dieser wegen der eingeschränkten Haftung leicht abzuwaschen. Gleiches gilt für Wasserlebewesen; diese finden an der behandelten Oberfläche keinen Halt und können sich nicht fest andocken.

Ein weiterer Vorteil der beschriebenen Antifoulings ist es, dass sie sich im Bedarfsfall leicht entfernen lassen. Das erfindungsgemässe Antifouling kann einfach mit alkalischen Reinigungsmitteln, sog. Grundreinigern, aufgelöst und abgewaschen werden kann. Eine solche Entfernung des Antifoulings kann nötig werden, z.B. bei der Reparatur von mechanischen Beschädigungen und Havarien am Unterwasserteil der Schiffes. In einem weiteren Aspekt betrifft die Erfindung daher die Verwendung von Antifoulings wie vorstehend beschrieben zum temporären Schutz von Unterwasserschiffen.

In einem **vierten Aspekt** betrifft die Erfindung Bootsrümpfe enthaltend ein Antifouling wie vorstehend beschrieben als mit einer Schichtdicke von 35 - 65 Mikrometer, bevorzugt 50 - 60 Mikrometer als äusserste Schicht.

Dass erfindungsgemässe Antifouling zeigt bereits sehr gute Wirkung bei einer Schichtdicke von lediglich 35 - 65 Mikrometer, wohingegen bekannte Antifoulings auf Wachsbasis in einer Schichtdicke von 100 - 500 Mikrometer aufgetragen werden müssen. In vielen Fällen ist eine Schichtdicke von 50 - 60 Mikrometern geeignet. Die vergleichsweise geringere Schichtdicke reduziert die Kosten und erleichtert die Applizierbarkeit.

Das erfindungsgemässe Antifouling wird in flüssiger Form auf die Unterwasser-Bauteile von Schiffen aufgesprüht und bildet beim Abkühlen auf Wassertemperatur (0-30°C, insbesondere 4-20°C) einen sich leicht fettig anfühlenden, nicht erhärtenden Film. Im Unterschied zum Antifouling gemäß GB 1 439 773 wird das Erzeugnis nach der Verarbeitung nicht erhärten, sondern leicht fettig bleiben. Dadurch kann die Qualität des Anstrichs, sowie die Notwendigkeit einer Erneuerung, durch einfaches manuelles Ertasten geprüft werden.

Nach Auftragung des Antifoulings bildet es einen weisslich - transparenten, nahezu unsichtbaren Film. Gerade bei Anstrichen für Sportboote, wo auch die Optik des Bootes von Bedeutung ist, wird ein farbloser Schutzanstrich positiv bewertet.

In einem **fünften Aspekt** betrifft die Erfindung Gebinde enthaltend ein erfindungsgemässes Antifouling. Prinzipiell können alle handelsüblichen Gebinde für das erfindungsgemässe Antifouling verwendet werden, die auch einzelnen Komponenten geeignet sind. Für den Endanwender sind solche Gebinde geeignet, in denen üblicherweise Farben (feste bzw. flüssige) angeboten werden. Demgemäss sind Dosen, Flaschen, Sprühflaschen (drucklose Gebinde), Sprühdosen (mit Druck beaufschlagte Gebinde) geeignet.

In einer vorteilhaften Ausführungsform betrifft die Erfindung eine Sprühflasche, insbesondere eine Sprühflasche welche aus allen Positionen (d.h. senkrecht, waagrecht, schräg über Kopf) arbeitet, enthaltend ein Antifouling wie vorstehend beschrieben. Solche Sprühflaschen (bzw. Sprühflaschen mit entsprechenden Sprühköpfen) sind bekannt und werden bspw. von der Firma Birchmeier (Schweiz) unter dem Handelsnamen "Mc Proper Plus" angeboten.

Von der Erfindung umfasst sind daher fertig befüllte Gebinde als auch sog. Kit of Parts, d.h. speziell an die Antifoulings angepasste Gebinde (z.B. die vorstehend genannte Sprühflasche) und Antifoulings in Nachfüllbehältern (z.B. als Beutel).

In einem **sechsten Aspekt** betrifft die Erfindung ein Verfahren zur Herstellung von Antifoulings und Gebinden enthaltend diese Antifoulings

Die Herstellung der erfindungsgemässen Antifoulings erfolgt auf an Sich bekannte Art durch die Vermischung der Komponenten bei erhöhter Temperatur, z.B. oberhalb der Schmelztemperatur. Geeignet sind Temperaturen beim Mischen von 20 - 80 °C, bevorzugt sind Temperaturen von etwa 50 - 70°C, z.B. 60°C. Nach Abkühlung auf Raumtemperatur bildet sich das Antifouling mit der Konsistenz einer festen fettigen Creme.

Es hat sich als vorteilhaft erwiesen, das Antifouling im flüssigen Zustand in die für den Verkauf bestimmten Gebinde abzufüllen.

Die nachfolgenden **Beispiele** sollen die Erfindung weiter erläutern ohne sie einzuschränken.

### 1. Herstellung eines Antifoulings

550 g Paraffinum subliquidum werden auf 60°C erhitzt und mit 450 g Hartparaffin portionsweise versetzt und für 30 min gerührt. Man erhält dadurch eine homogene, transparente Masse, die nach Abkühlung auf Raumtemperatur die Konsistenz einer festen fettigen Creme annimmt.

### 2. Anwendung des Antifoulings

Die Anwendung des Erzeugnisses erfolgt aus einer drucklosen Handsprühflasche heraus (Fa. Birchmeier, Mc Proper Plus). Dazu wird das bei Raumtemperatur pastöse Erzeugnis in der Sprühflasche aufgewärmt und verflüssigt. Empfohlen wird, die gefüllte Sprühflasche unter einen Warmwasserstrahl oder in einer warmes Wasser enthaltenden Pfanne von ca. 50-60 Grad C aufzuwärmen, bis der Inhalt flüssig wird, was ab ca. 40 °C der Fall ist. Idealerweise wird das Produkt auf eine Temperatur von rund 50 Grad C erwärmt, so dass die Sprühflasche noch bequem in der Hand gehalten werden kann. Die vorgängig von losen Teilen und Verschmutzungen gereinigten und getrockneten Flächen des Unterwasserschiffs werden sodann mit dem Erzeugnis gleichmässig besprüht. Als Verbrauch gilt 50-60 gr./m2 als Richtwert, was einer Schichtstärke von rund 60-80 Mikrometern entspricht. Dieser Verbrauch ist leicht zu erzielen, ergibt er sich doch schon von selbst bei der genannten Verarbeitungsmethode und Erwärmungstemperatur.

Optional können die frisch aufgesprühten Flächen mit einem Kurzhaar-Farbroller durch leichtes überrollen nachverschlichtet werden.

### 3. Ergebnisse

Ein Sportboot wurde nach dem o.g Verfahren am Unterwasserschiff beschichtet und für eine Saison im üblichen Betrieb verwendet. Zu Saisonende wurde das Unterwasserschiff untersucht. Dabei zeigte sich, dass weder Bewuchs noch Befall mit Lebewesen eingetreten ist. Dies wurde sowohl in den Bereichen beobachtet, die nachverschlichtet wurden, als auch in den nicht nachverschlichteten Bereichen.

### 4. Vergleichsversuch

Versuche mit handelsüblichen, wässrigen Wachsemulsionen, wie sie z.B. auf Personenwagen verwendet werden, zeigten im dauernden Wasserkontakt eine zeitlich beschränkte Wirksamkeit. Durch den langsam voranschreitenden Abbau im Wasser, erweisen sich diese Systeme als ungeeignet.

## Patentansprüche

1. Antifouling umfassend ein Gemisch aus 33-48 % eines bei Raumtemperatur festen Kohlenwasserstoffgemisches und 52 - 67 % eines bei Raumtemperatur flüssigen Kohlenwasserstoffgemisches.

2. Antifouling gemäss Anspruch 1 bestehend aus 33-48 % Hartwachs und 52-67 % Paraffinum subliquidum

3. Verfahren zum Beschichten von Unterwasserschiffen, **dadurch gekennzeichnet, dass** ein Antifouling gemäss einem der Ansprüche 1 oder 2 mittels Streich-, Roll- oder Sprühverfahren in einer Dicke von weniger als 100 Mikrometer, insbesondere in einer Dicke von 50 - 60 Mikrometer, als äusserste Schicht auf das Unterwasserschiff aufgetragen wird.

4. Verfahren gemäss Anspruch 3, **dadurch gekennzeichnet, dass** das Antifouling mittels aufsprühen aus einer Sprühflasche, insbesondere eine in allen Positionen arbeitenden Sprühflasche, aufgebracht wird und dass besagte Sprühflasche vorgängig gegebenenfalls auf 50 - 60 °C erwärmt wird.

5. Verwendung von Antifoulings gemäss einem der Ansprüche 1 oder 2 zur Behandlung von unter Wasser liegenden Teilen von Schiffen und/oder anderen Vorrichtungen welche für den Einsatz unter Wasser vorgesehen sind.

6. Verwendung von Antifoulings gemäss einem der Ansprüche 1 oder 2 zum temporären Schutz von Unterwasserschiffen und/oder anderen Vorrichtungen welche für den Einsatz unter Wasser vorgesehen sind.

7. Bootsrumpf beschichtet mit einem Antifouling gemäss Anspruch 1 oder 2 als äusserste Schicht in einer Schichtdicke von 35 - 65 Mikrometer, insbesondere in einer Schichtdicke 50 - 60 Mikrometer.

8. Sprühflasche, insbesondere eine Sprühflasche welche aus allen Positionen arbeitet, enthaltend ein Antifouling gemäss Anspruch 1 oder 2.

9. Verfahren zur Herstellen eines Antifoulings gemäss einem der Ansprüche 1 oder 2 **dadurch gekennzeichnet, dass** die einzelnen Komponenten bei erhöhter Temperatur bis zur Bildung einer homogenen Masse vermischt werden und ggf. im noch flüssigen Zustand abgefüllt werden.
